(19) Europäisches Patentamt
European Patent Office
Office européen des brevets

(11) **EP 4 708 393 A1**

(12) **EUROPEAN PATENT APPLICATION**

(43) Date of publication:
**11.03.2026 Bulletin 2026/11**

(21) Application number: **25193134.1**

(22) Date of filing: **31.07.2025**

(51) International Patent Classification (IPC):
**H01M 4/36** (2006.01)   **H01M 4/38** (2006.01)

(52) Cooperative Patent Classification (CPC):
**H01M 4/366; H01M 4/386**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.07.2024   KR 20240101875**

(71) Applicants:
• **SK On Co., Ltd.**
**Seoul 03161 (KR)**
• **SK Innovation Co., Ltd.**
**Seoul 03188 (KR)**

(72) Inventors:
• **PARK, Gwi Ok**
**34124 Daejeon (KR)**

• **LA, Yun Ji**
**34124 Daejeon (KR)**
• **YANG, Young Mo**
**34124 Daejeon (KR)**
• **CHUNG, Dong Jae**
**34124 Daejeon (KR)**
• **HWANG, Soo Young**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE ACTIVE MATERIAL FOR SECONDARY BATTERY AND SECONDARY BATTERY INCLUDING THE SAME**

(57)    An anode active material for a lithium secondary battery based on some embodiments of the disclosed technology includes composite particles that include: carbon-based particles including pores; and a silicon-containing coating formed on a surface of the carbon-based particles, wherein a weight increase start temperature of the composite particle, measured by thermogravimetric analysis (TGA) at a heating rate of 10 °C/min, is from 440 °C to 580 °C.

**FIG. 1**

**Description**

BACKGROUND

1. Field

The disclosed technology relates to an anode active material for a secondary battery, and a secondary battery including the anode active material.

2. Description of the Related Art

A secondary battery is a type of battery that can be repeatedly charged and discharged. With the rapid advancement of information and communication technology, as well as display industries, secondary batteries have been widely used as power sources in various portable electronic devices, such as camcorders, mobile phones, and laptop computers. Recently, battery packs including secondary batteries have also been developed and adopted as power sources for eco-friendly vehicles, such as hybrid vehicles and electric vehicles.

Examples of secondary batteries may include lithium secondary batteries, nickel-cadmium batteries, nickel-hydrogen batteries and others. Among them, lithium secondary batteries offer a high operating voltage and a high energy density per unit weight, making them advantageous for fast charging and lightweight design., As a result, their development continues in these areas.

SUMMARY

In an aspect of the disclosed technology, an anode active material for a secondary battery with improved output characteristics and cycle life characteristics may be provided.

In another aspect of the disclosed technology, a secondary battery with improved output characteristics and cycle life characteristics may be provided.

An anode active material for a secondary battery based on some example embodiments of the disclosed technology includes composite particles, wherein the composite particles include: carbon-based particles including pores; and a silicon-containing coating formed on a surface of the carbon-based particles. A weight increase start temperature of the composite particle, measured by thermogravimetric analysis (TGA) at a heating rate of 10 °C/min, is from 440 °C to 580 °C.

In some embodiments, the weight increase start temperature may be a temperature at an intersection of: a tangent at an average weight point between a maximum weight and a minimum weight; and a tangent at a minimum weight point in a TGA graph.

In some embodiments, the weight increase start temperature may be from 451 °C to 550 °C.

In some embodiments, a first Raman peak intensity ratio of the composite particle, defined by Equation 1 below, may be 2.25 or more:

$$[\text{Equation 1}]$$

$$\text{First Raman peak intensity ratio} = I_D/I_G$$

In Equation 1, $I_D$ is a maximum peak intensity in a wavenumber range of 1330 cm$^{-1}$ to 1380 cm$^{-1}$ in the Raman spectrum of the composite particle, and $I_G$ is a maximum peak intensity in a wavenumber range of 1560 cm$^{-1}$ to 1585 cm$^{-1}$ in the Raman spectrum of the composite particle.

In some embodiments, the first Raman peak intensity ratio may be 2.37 to 2.63.

In some embodiments, the Raman spectrum may be obtained by deconvoluting a Raman spectroscopy graph of the composite particle into five curves including a D* band with a maximum peak intensity in a wavenumber range of 1100 cm$^{-1}$ to 1250 cm$^{-1}$, a D band with a maximum peak intensity in a wavenumber range of 1330 cm$^{-1}$ to 1380 cm$^{-1}$, a D" band with a maximum peak intensity in a wavenumber range of 1500 cm$^{-1}$ to 1550 cm$^{-1}$, a G band with a maximum peak intensity in a wavenumber range of 1560 cm$^{-1}$ to 1585 cm$^{-1}$, and a D' band with a maximum peak intensity in a wavenumber range of 1590 cm$^{-1}$ to 1620 cm$^{-1}$.

In some embodiments, a second Raman peak intensity ratio of the composite particle, defined by Equation 2 below, may be 0.30 or more:

[Equation 2]

$$\text{Second Raman peak intensity ratio} = ID^*/IG$$

In Equation 2, $ID^*$ is a maximum peak intensity in a wavenumber range of 1100 cm$^{-1}$ to 1250 cm$^{-1}$ in the Raman spectrum of the composite particle, and $IG$ is a maximum peak intensity in a wavenumber range of 1560 cm$^{-1}$ to 1585 cm$^{-1}$ in the Raman spectrum of the composite particle.

In some embodiments, the second Raman peak intensity ratio may be 0.32 to 0.36.

In some embodiments, the carbon-based particles may include at least one of activated carbon, carbon nanotubes, carbon nanowires, graphene, carbon fibers, carbon black, graphite, porous carbon, pyrolyzed cryogel, pyrolyzed xerogel, or pyrolyzed aerogel.

In some embodiments, the silicon-containing coating may include silicon in an amorphous structure.

In some embodiments, a silicon content based on a total weight of the composite particles may be 40% by weight to 50% by weight.

In some embodiments, the composite particle may further include a carbon coating formed on the silicon-containing coating.

In some embodiments, the pores of the carbon-based particles may have a shape that is recessed from an outermost portion of the carbon-based particles into an interior of the carbon-based particles.

In some embodiments, the carbon-based particles may include an amorphous structure.

A secondary battery based on some example embodiments of the disclosed technology includes: an anode including the above-described anode active material for a secondary battery; and a cathode disposed opposite to the anode.

In an embodiment of the disclosed technology, gas generation caused by side reactions between the anode active material and the electrolyte may be suppressed.

In an embodiment of the disclosed technology, the internal resistance of the secondary battery may be reduced.

In an embodiment of the disclosed technology, the high-temperature cycle life characteristics of the secondary battery may be improved.

The anode active material for a secondary battery of the disclosed technology and the secondary battery including the same may be widely applied in green technologies, such as electric vehicles, battery charging stations, solar power generation, and wind power generation,. The anode active material for a secondary battery of the disclosed technology and the secondary battery including the same may be used in eco-friendly electric vehicles, hybrid vehicles, and similar technologies aimed at mitigating climate change by reducing air pollution and greenhouse gas emissions.

BRIEF DESCRIPTION OF THE DRAWINGS

The above and other objects, features and other advantages of the disclosed technology will be more clearly understood from the following detailed description taken in conjunction with the accompanying drawings.

FIG. 1 is a schematic cross-sectional view illustrating a composite particle based on some example embodiments.
FIG. 2 is a schematic plan view illustrating a lithium secondary battery based on some example embodiments.
FIG. 3 is a schematic cross-sectional view illustrating a lithium secondary battery based on some example embodiments.
FIG. 4 is the Raman spectrum of the composite particles of the examples.
FIG. 5 is the Raman spectrum of the composite particles of the comparative examples.
FIG. 6 is a thermogravimetric analysis (TGA) graph showing the change in weight of the composite particles of the examples with respect to the temperature.
FIG. 7 is a thermogravimetric analysis (TGA) graph showing the change in weight of the composite particles of the comparative examples with respect to the temperature.

DETAILED DESCRIPTION

Section headings are used in the present document only for ease of understanding and do not limit scope of the embodiments to the section in which they are described.

Recently, as the range of the application for lithium secondary batteries continues to expand, efforts to develop secondary batteries with higher capacity and output have been underway. For example, high-capacity materials such as silicon and carbon can be combined and used as anode active materials.

However, due to the significant difference in volume expansion rates within the silicon-carbon composite anode active material, repeated charging and discharging can lead to the formation of cracks and exposure of the anode active material to the electrolyte.

Embodiments of the disclosed technology provide an anode active material for a secondary battery (hereinafter referred to as "anode active material") that includes composite particles where a composite particle includes two or more constituents of different materials. A secondary battery including the anode active material is also provided.

Hereinafter, example embodiments of the disclosed technology will be described in detail. However, the disclosed technology is not limited to the specific embodiments described, which are provided by way of example.

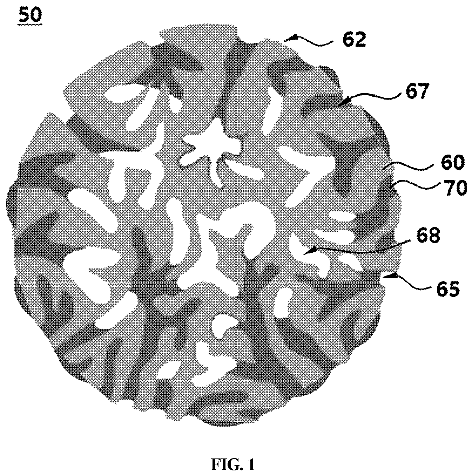

FIG. 1 is a schematic cross-sectional view illustrating a composite particle based on some example embodiments.

FIG. 1 schematically illustrates an example of the shape of the composite particle for each of explanation. However, the structure or shape of the composite particle implemented based on some embodiments of the disclosed technology are not limited to those shown in FIG. 1. For example, the cross-section of the carbon-based particle may deviate from a circle. In addition, a silicon-containing coating may be partially formed in the pores and on the surface of the carbon-based particles, and may be formed as a plurality of discontinuous islands or patterns.

Referring to the example in FIG. 1, the anode active material may include a plurality of composite particles 50 and one composite particle 50 may include, for example, carbon (C)-based particles 60 and a silicon (Si)-containing coating 70 in some implementations.

In example embodiments of the disclosed technology, the carbon-based particles 60 may include pores 65. For example, the carbon-based particles 60 may be a porous particle including a plurality of pores.

In some embodiments, examples of the carbon-based particles 60 may include a carbon material in various forms or configurations, including, for example, activated carbon, carbon nanotubes, carbon nanowires, graphene, carbon fibers, carbon black, graphite, porous carbon, pyrolyzed cryogel, pyrolyzed xerogel, pyrolyzed aerogel and others. Carbon-based particles may include one carbon material or a combination of two or more different carbon materials in various implementations of the disclosed technology.

In some embodiments, the carbon-based particles 60 may be derived from coconut shell charcoal and/or petroleum coke.

In some embodiments, the above-described carbon-based particle 60 may include an amorphous structure or a crystalline structure.

In an embodiment, the carbon-based particle 60 may include an amorphous structure. As a result, durability of the anode active material may be increased, and the occurrence of cracks may be suppressed during charging and discharging or when exposed to external impacts. Accordingly, the cycle life characteristics of the secondary battery may be improved.

In some embodiments, the pores 65 of the carbon-based particle 60 may have a shape that is recessed from the outermost portion of the carbon-based particle 60 into an interior of the carbon-based particle 60. For example, the pores 65 may include open pores that are exposed to the exterior of the carbon-based particle 60.

In some embodiments, the pores 65 of the carbon-based particle 60 may have a size of 0.1 nm to 10 nm, 0.5 nm to 8 nm, or 1 nm to 5 nm. Within the above range, excessive deposition of silicon may be prevented, such that an occurrence of cracks in the anode active material during charging and discharging of the secondary battery may be further suppressed.

In an embodiment, the size of the pore 65 may be measured using a surface area analyzer (e.g., ASAP-2420 from Micromeritics). For example, the size of the pore 65 may be determined by measuring the maximum peak position of the Barrett-Joyner-Halenda (BJH) pore size distribution curve obtained from the nitrogen gas sorption isotherm of the carbon-based particle 60 sample.

In the example of the particular composite particle 50 in FIG. 1, a silicon-containing coating 70 may be formed on the carbon-based particles 60 and may fill in some or part of the pores 65. For example, volume expansion of silicon included in the silicon-containing coating 70 may be accommodated or buffered by the pores 65. Accordingly, cracks due to a difference in the volume expansion rates between carbon (e.g., about 150% by volume ("vol %") or less) and silicon (e.g., about 400 vol % or more) during charging and discharging of the battery may be prevented while employing the relatively high capacity of silicon. Accordingly, gas generation caused by side reactions between the anode active material and the electrolyte may be suppressed, and the cycle life characteristics of the secondary battery may be improved.

The size of the pore 65 may refer to the diameter of the entrance of the pore 65 formed in the surface of carbon-based particle 60.

The term(s) "surface of carbon-based particles" and/or "surface of carbon-based particles 60" as used herein. The one or more other constituent materials of the composite particle 50 are formed to be present in the carbon-based particle 60 by attaching to the carbon-based particle 60. For example, as illustrated in FIG. 1, the silicon-containing coating 70 may be present at or attach to one or more portions of an outer surface 62 of carbon-based particle 60, or one or more segments of an inner surface 67 of the pores 65, or both the outer surface 62 of carbon-based particle 60 and the inner surface 67 of the pores 65.

For example, the silicon-containing coating 70 may be formed on at least a portion of the outer surface 62 of the carbon-based particle 60.

For example, the silicon-containing coating 70 may be formed on at least a portion of the inner surface 67 of the pores 65 of the carbon-based particle 60.

For example, the silicon-containing coating 70 may be formed on at least a portion of the outer surface 62 of the carbon-based particle 60 and at least a portion of the inner surface 67 of the pores 65. For example, the carbon-based particle 60 may include voids 68 among a plurality of pores, in which the silicon-containing coating 70 is not formed..

In some embodiments, the silicon-containing coating 70 may include silicon, and optionally further include $SiO_x$ ($0<x<2$).

In one embodiment, the silicon included in the silicon-containing coating 70 may include an amorphous structure. Accordingly, the output characteristics may be improved and the cycle life characteristics during repeated charging and discharging may be further enhanced.

In some embodiments, the composite particles 50 may further include a carbon coating (not shown) formed on the silicon-containing coating 70. Accordingly, contact between silicon of the anode active material and water may be prevented. As a result, a decrease in the discharge capacity and capacity efficiency of the secondary battery may be suppressed prior to anode formation following preparation of the anode active material.

In some embodiments, the carbon coating may also be formed on a portion of the surface of the carbon-based particle 60 where the silicon-containing coating 70 is not formed. For example, the carbon coating may entirely cover both the carbon-based particles 60 and the silicon-containing coating 70. Accordingly, mechanical stability and chemical stability of the anode active material may be improved.

In one embodiment, the carbon coating may include at least one of carbon or a conductive polymer. For example, the conductive polymer may include polyacetylene, polyaniline, polypyrrole, polythiophene and the like.

In some example embodiments of the disclosed technology, a first Raman peak intensity ratio of the composite particle 50, defined by Equation 1 below, may be 2.25 or more. Alternately, in some embodiments, the ratio may be 2.34 or more, 2.37 or more, 2.55 or more. In some embodiments, the ratio may be in the range of 2.25 to 2.63, or 2.37 to 2.63.

[Equation 1]

$$\text{First Raman peak intensity ratio} = ID/IG$$

In Equation 1, ID is a maximum peak intensity in a wavenumber range of 1330 $cm^{-1}$ to 1380 $cm^{-1}$ (e.g., the D band of the Raman spectrum) in the Raman spectrum of the composite particle. IG is a maximum peak intensity in a wavenumber range of 1560 $cm^{-1}$ to 1585 $cm^{-1}$ (e.g., the G band of the Raman spectrum) in the Raman spectrum of the composite particle.

In some embodiments, the term "maximum peak intensity" may refer to the maximum peak height in a specific wavenumber range of the Raman spectrum.

For example, the first Raman peak intensity ratio may indicate the degree of amorphousness of the composite particle 50. For example, a larger first Raman peak intensity ratio may indicate a greater degree of amorphousness in the composite particle 50.

Within the above first Raman peak intensity ratio range, a sufficient degree of amorphousness of the composite particle 50 may be ensured, thereby improving the high-temperature stability. Accordingly, the internal resistance of a secondary battery including the anode active material containing the composite particles 50 may be reduced, and the high-temperature cycle life characteristics may be improved.

In some embodiments, a second Raman peak intensity ratio of the composite particle 50, defined by Equation 2 below, may be 0.30 or more, and in one embodiment, may be 0.30 to 0.36, or 0.32 to 0.36.

[Equation 2]

$$\text{Second Raman peak intensity ratio} = ID^*/IG$$

In Equation 2, ID* is a maximum peak intensity in a wavenumber range of 1100 $cm^{-1}$ to 1250 $cm^{-1}$ (e.g., the D* band of the Raman spectrum) in the Raman spectrum of the composite particle 50. IG is a maximum peak intensity in a wavenumber range of 1560 cm$^{-1}$ to 1585 cm$^{-1}$ (e.g., the G band of the Raman spectrum) in the Raman spectrum of the composite particle 50.

For example, the second Raman peak intensity ratio may indicate the degree of oxidation of carbon included in the composite particle 50. For example, a higher second Raman peak intensity ratio may result in improved high-temperature stability of the carbon-based particles 60 included in the composite particle 50.

Within the above second Raman peak intensity ratio range, the internal resistance of a secondary battery including an anode active material containing the composite particles 50 may be reduced, while the high-temperature cycle life characteristics may be improved.

In some embodiments, the Raman spectrum may be obtained by deconvoluting a Raman spectroscopy graph of the composite particle 50 into five curves including a D* band with a maximum peak intensity in a wavenumber range of 1100 cm$^{-1}$ to 1250 cm$^{-1}$, a D band with a maximum peak intensity in a wavenumber range of 1330 cm$^{-1}$ to 1380 cm$^{-1}$, a D" band with a maximum peak intensity in a wavenumber range of 1500 cm$^{-1}$ to 1550 cm$^{-1}$, a G band with a maximum peak intensity in a wavenumber range of 1560 cm$^{-1}$ to 1585 cm$^{-1}$, and a D' band with a maximum peak intensity in a wavenumber range of 1590 cm$^{-1}$ to 1620 cm$^{-1}$.

For example, a graph showing changes in peak intensity of the composite particle 50 as a function of wavenumber may be obtained using a Raman analyzer (e.g., the Raman spectroscopy graph). The graph may be deconvoluted into five individual curves, each with a distinct maximum peak intensity using Lorentzian curves. For example, the first Raman peak intensity ratio may be calculated by substituting the maximum peak intensity of the D band (ID of Equation 1) and the maximum peak intensity of the G band (IG of Equation 1) among the five bands into Equation 1. For example, the second Raman peak intensity ratio may be calculated by substituting the maximum peak intensity of the D* band (ID* of Equation 2) and the maximum peak intensity of the G band (IG of Equation 2) among the five bands into Equation 2.

In some embodiments of the disclosed technology, the composite particle may have a weight increase start temperature within a certain temperature range when measured by thermogravimetric analysis (TGA) at a predetermined heating rate. In some embodiments of the disclosed technology, the weight increase start temperature of the composite particle 50 measured by thermogravimetric analysis (TGA) at a heating rate of 10 °C/min may be 440 °C to 580 °C. In some embodiments, the weight increase start temperature may be 450 °C or higher, 480 °C or higher, 510 °C or higher, 530 °C or higher, or 540 °C or higher, and 560 °C or lower, 540 °C or lower, 530 °C or lower, 510 °C or lower, or 480 °C or lower. In some embodiments, the weight increase start temperature may be 450 °C to 570 °C, 451 °C to 550 °C, or 515 °C to 550 °C.

The TGA graph may be a graph showing the weight change of the composite particle 50 as a function of the heating temperature. For example, the composite particle 50 may be introduced into a thermogravimetric analyzer, and the temperature may be increased from room temperature (25 °C) to 900 °C at a heating rate of 10 °C/min. The mass change may be then measured, and the weight change of the composite particle 50 with respect to the heating temperature may be represented by a graph (e.g., a TGA graph).

For example, the weight of the composite particle 50 introduced into the thermogravimetric analyzer may be about 9 mg to 11 mg.

The weight increase start temperature may be a temperature at which the weight of the composite particle 50 begins to increase during the thermogravimetric analysis.

For example, the weight increase start temperature may be determined by extrapolation from the midpoint between the maximum weight and the minimum weight in the TGA graph. For example, the weight increase start temperature may be a temperature at an intersection of the tangent at an average weight point between the maximum weight and the minimum weight, and the tangent at a minimum weight point in the TGA graph.

Within the above weight increase start temperature range, the weight increase due to the oxidation of silicon included in the silicon-containing coating 70 may be greater than the weight decrease due to the heat loss of the carbon-based particles 60. Accordingly, the internal resistance of the secondary battery including the anode active material containing the composite particles 50 may be reduced, and the high-temperature cycle life characteristics may be improved.

In some embodiments, the silicon content based on the total weight of the composite particles 50 may be 40% by weight ("wt%") to 50 wt%, and in one embodiment, 43 wt% to 47 wt%. Within the above range, the silicon may be sufficiently oxidized while suppressing an increase in resistance. Accordingly, the internal resistance of the secondary battery including the anode active material containing the composite particles 50 may be reduced and the high-temperature cycle life characteristics may be improved.

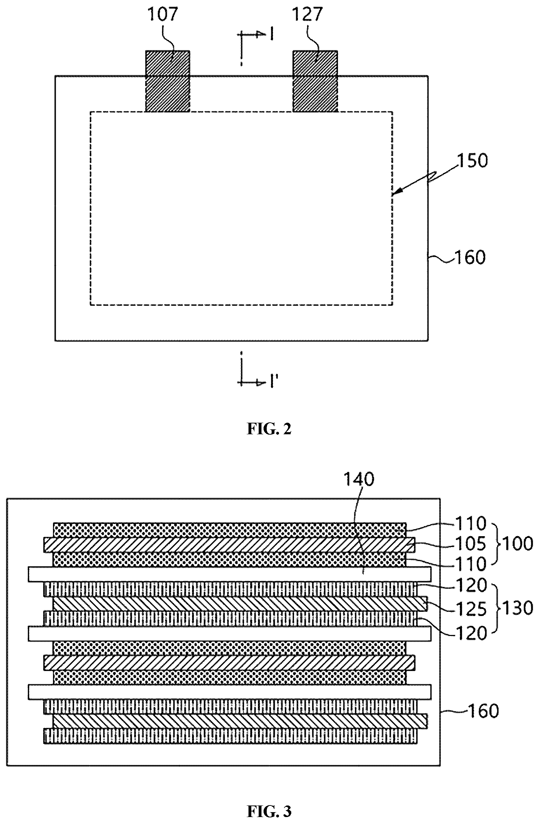

FIGS. 2 and 3 are schematic plan and cross-sectional views, respectively, illustrating a lithium secondary battery based on some example embodiments. For example, FIG. 3 is a cross-sectional view taken along the line I-I' of FIG. 2 in the thickness direction.

Referring to FIGS. 2 and 3, the lithium secondary battery may include an anode 130 including the above-described anode active material and a cathode 100 disposed opposite to the anode 130.

The cathode 100 may include a cathode current collector 105, and a cathode active material layer 110 formed on at least one surface of the cathode current collector 105.

The cathode current collector 105 may include stainless steel, nickel, aluminum, titanium or an alloy thereof. The cathode current collector 105 may also include aluminum or stainless steel having a surface treated with carbon, nickel, titanium or silver. For example, the cathode current collector 105 may have a thickness of 10 to 50 $\mu$m.

The cathode active material layer 110 may include a cathode active material. The cathode active material may include a compound capable of reversibly intercalating and deintercalating lithium ions.

In some example embodiments, the cathode active material may include a lithium-nickel metal oxide. The lithium-nickel metal oxide may further include at least one of cobalt (Co), manganese (Mn), or aluminum (Al).

In some embodiments, the cathode active material or the lithium-nickel metal oxide may include a layered structure or a crystal structure represented by Formula 1 below.

$$[\text{Formula 1}] \qquad Li_xNi_aM_bO_{2+z}$$

In Formula 1, x, a, b and z may satisfy $0.9 \leq x \leq 1.2$, $0.5 \leq a \leq 0.99$, $0.01 \leq b \leq 0.5$, $-0.5 \leq z \leq 0.1$. As described above, M may include Co, Mn, and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the inclusion and substitution of the additional elements.

In one embodiment, the cathode active material may further include auxiliary elements that are added to the main active elements to enhance chemical stability thereof or the layered structure/crystal structure. The auxiliary element may be incorporated into the layered structure/crystal structure together with the main active elements to form a bond, and it should be understood that this case is also considered within the scope of the chemical structure represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element that contributes to the capacity/output activity of the cathode active material together with Co or Mn like Al.

For example, the cathode active material or the lithium-nickel metal oxide may include a layered structure or a crystal structure represented by Formula 1-1 below.

$$[\text{Formula 1-1}] \qquad Li_xNi_aM1_{b1}M2_{b2}O_{2+z}$$

In Formula 1-1, M1 may include Co, Mn, and/or Al. M2 may include the auxiliary elements described above. In Formula 1-1, x, a, b1, b2 and z may satisfy $0.9 \leq x \leq 1.2$, $0.5 \leq a \leq 0.99$, $0.01 \leq b1+b2 \leq 0.5$, $-0.5 \leq z \leq 0.1$.

The cathode active material may further include a coating element or a doping element. For example, elements that are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to become incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage and cycle life stability of the cathode or the secondary battery may be relatively reduced, and side reactions with the electrolyte may also increase. However, in some example embodiments, by including Co, the cycle life stability and capacity retention characteristics may be improved through Mn while maintaining electrical conductivity.

The content of Ni (e.g., a mole fraction of nickel based on the total number of moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium metal oxide-based active material, a lithium manganese oxide-based active material, a lithium nickel oxide-based active material, or a lithium iron phosphate (LFP) active material (e.g., $LiFePO_4$).

In some embodiments, the cathode active material may include, for example, an Li-rich layered oxide (LLO), or over-lithiated oxide (OLO)-based active material, a Co-less active material, or an Mn-rich-based active material, each having a chemical structure or crystal structure represented by Formula 2. These may be used alone or in combination of two or more thereof.

[Formula 2]  $p[Li_2MnO_3]\cdot(1-p)[Li_qJO_2]$

In Formula 2, p and q may satisfy $0<p<1$, $0.9\leq q\leq1.2$, and J may include at least one element among Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 105, then dried and pressed to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, vapor-grown carbon fibers (VGCFs), carbon nanotubes (CNTs), carbon fibers, and/or metal-based conductive materials, including perovskite materials, such as tin, tin oxide, titanium oxide, $LaSrCoO_3$, and $LaSrMnO_3$. These may be used alone or in combination of two or more thereof.

The cathode slurry may further include a thickener and/or dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 $\mu$m to 50 $\mu$m.

The anode active material layer 120 may include an anode active material including the above-described composite particles 50. For example, the anode active material may include a plurality of composite particles 50.

In some embodiments, the anode active material may include the composite particles 50 and a graphite-based active material. For example, the graphite-based active material may include artificial graphite and/or natural graphite.

The content of the composite particles 50 may be 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more based on the total weight of the anode active material (e.g., the total weight of the plurality of composite particles 50 and the graphite-based active material).

The content of the composite particles may be 99 wt% or less, 95 wt% or less, 90 wt% or less, 85 wt% or less, 80 wt% or less, 75 wt% or less, 70 wt% or less, 65 wt% or less, 60 wt% or less, 55 wt% or less, or 50 wt% or less based on the total weight of the anode active material.

In one embodiment, the anode active material may be substantially composed of the composite particles 50 and the graphite-based active material.

The anode active material may be mixed in a solvent to prepare an anode slurry. The anode slurry may be applied/deposited to the anode current collector 125, then dried and pressed to prepare an anode active material layer 120. The coating may include a method such as gravure coating, slot die coating, simultaneous multilayer die coating, imprinting, doctor blade coating, dip coating, bar coating or casting. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In some example embodiments, a separation membrane 140 may be interposed between the cathode 100 and the anode 130. The separation membrane 140 may be configured to prevent an electrical short-circuit between the cathode 100 and the anode 130, and to allow a flow of ions to occur. For example, the separation membrane may have a thickness of 10 to 20 $\mu$m.

For example, the separation membrane 140 may include a porous polymer film or a porous nonwoven fabric.

The porous polymer film may include a polyolefin polymer, such as an ethylene polymer, a propylene polymer, an ethylene/butene copolymer, an ethylene/hexene copolymer, and an ethylene/methacrylate copolymer. These may be used alone or in combination of two or more thereof.

The porous nonwoven fabric may include high-melting point glass fibers, polyethylene terephthalate fibers, etc.

The separation membrane 140 may also include a ceramic material. For example, inorganic particles may be coated on the polymer film or dispersed within the polymer film to improve heat resistance.

The separation membrane 140 may have a single-layer or multi-layer structure including the above-described polymer film and/or nonwoven fabric.

In some example embodiments, an electrode cell is defined by the cathode 100, the anode 130, and the separation membrane 140, and a plurality of electrode cells may be stacked to form an electrode assembly 150, for example, in the form of a jelly roll. For example, the electrode assembly 150 may be formed by winding, stacking, z-folding, stack-folding, etc. the separation membrane 140.

The electrode assembly 150 may be accommodated together with an electrolyte in a case 160, thereby defining a lithium secondary battery. In some example embodiments, the electrode assembly 150 may include an electrolyte in the case. A non-aqueous electrolyte may be used as the electrolyte.

The non-aqueous electrolyte contains a lithium salt as an electrolyte and an organic solvent, and the lithium salt may expressed as, for example, $Li^+X^-$, and examples of the anion (X-) of the lithium salt include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

Examples of the organic solvents include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, Tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound, etc. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compounds may include 1,3-propane sultone, 1,3-propene sultone, 1,4-butane sultone, etc.

The cyclic sulfate compounds may include 1,2-ethylene sulfate, 1,2-propylene sulfate, etc.

The cyclic sulfite compounds may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be arranged between the cathode 100 and the anode 130 instead of the above-described separation membrane 140.

The solid electrolyte may include a sulfide-based electrolyte. As a non-limiting example, the sulfide-based electrolyte is $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m, n are positive numbers, Z is Ge, Zn or Ga), $Li_2S-GeS_2$, $Li_2S-SiS_2-Li_3PO_4$, $Li_2S-SiS_2-Li_pMO_q$, (p, q is a positive number, M may include P, Si, Ge, B, Al, Ga, or In), $Li_7-xPS_6-xCl_x$ ($0 \le x \le 2$), $Li_7-xPS_6-xBr_x$ ($0 \le x \le 2$), $Li_7-xPS_6-xI_x$ ($0 \le x \le 2$), etc. These

may be used alone or in combination of two or more thereof.

In one embodiment, the solid electrolyte may include an oxide-based amorphous solid electrolyte, such as $Li_2O$-$B_2O_3$-$P_2O_5$, $Li_2O$-$SiO_2$, $Li_2O$-$B_2O_3$, $Li_2O$-$B_2O_3$-$ZnO$, etc.

As shown in FIGS. 2 and 3, electrode tabs (e.g., cathode tabs and anode tabs) may protrude from the cathode current collector 105 and the anode current collector 125 belonging to each electrode cell and extend to one side of the case 160, respectively. The electrode tabs may be fused together with the one side of the outer case 160 to form electrode leads (cathode leads 107 and anode leads 127) that extend or are exposed to the outside of the outer case 160.

The lithium secondary battery may be manufactured in a cylindrical shape, a square shape, a pouch shape, a coin shape, etc. using a can, for example.

Hereinafter, embodiments of the disclosed technology will be further described with reference to specific experimental examples. The examples and comparative examples included in the experimental examples are provided for illustrative purposes and do not limit the scope of the appended claims. Variations, improvements and enhancements of the disclosed embodiments can be made based on the disclosure of this patent document.

Example 1

Preparation of carbon-based particles

Coconut shells were dried to remove moisture. Nitrogen gas was injected into the coconut shells, and the temperature was increased to 900 °C at a rate of 10 °C/min. The shells were then carbonized at 900 °C for 1 hour, and cooled naturally to room temperature (25 °C) to prepare coconut shell charcoal powder.

A mixture of the coconut shell charcoal powder and a KOH aqueous solution was heated to a temperature of 600 °C to 850 °C at a rate of 10 °C/min in an argon gas atmosphere, and heat-treated at 600 °C to 850 °C for 1 hour to activate the coconut shell charcoal powder.

A mixture of a 1 M hydrochloric acid solution and the coconut shell charcoal powder was stirred at 70 °C for 12 hours, and repeatedly washed with distilled water until the pH reached 7.

The coconut shell charcoal powder was dried after washing and heat-treated at 750 °C for 1 hour while injecting a hydrogen-containing gas (a mixed gas of hydrogen and nitrogen in a mass ratio of 5:95) to prepare carbon-based particles.

Formation of silicon-containing coating

A silicon-containing gas including silane gas and argon gas in a volume ratio of 1:9 was injected into a CVD coater at a flow rate of 50 mL/min to 100 mL/min. The temperature was increased to 400 °C at a rate of 5 °C/min to 20 °C/min, and then held at 400 °C for about 120 minutes to calcine the mixture and prepare composite particles including silicon-containing coating.

Formation of anode

An anode slurry was prepared by mixing 95.5 wt% of an anode active material, which included 15 wt% of the prepared composite particles and 80.5 wt% of artificial graphite, 1 wt% of CNT as a conductive material, 2 wt% of styrene-butadiene rubber (SBR) as a binder, and 1.5 wt% of carboxymethyl cellulose (CMC) as a thickener.

The anode slurry was applied to a copper substrate, then dried and roll-pressed to prepare an anode.

Manufacture of lithium (Li) half-cell

A lithium half-cell was manufactured using the anode prepared by the above-described method and lithium (Li) metal as a counter electrode (cathode).

Specifically, a separation membrane (polyethylene, thickness 20 $\mu$m) was interposed between the prepared anode and lithium metal (thickness 1 mm) to form a lithium coin half-cell in accordance with the CR2016 standard (diameter 20 mm, thickness 1.6 mm).

The assembly of the lithium metal/separation membrane/anode was placed in a coin cell plate. After injecting the electrolyte, a cap was placed on it and the cell was clamped. A solution, prepared by dissolving a 1 M LiPF6 solution in a mixed solvent of EC/EMC (3:7; volume ratio), and further adding 2.0 vol% of fluoroethylene carbonate (FEC) based on the total volume of the electrolyte, was used as the electrolyte. After clamping, the cells were allowed to impregnate for 3 to 24 hours, followed by 3 cycles of charge and discharge at 0.1C (charging conditions: CC/CV 0.1C 0.01V 0.01C CUT-OFF; discharging conditions: CC 0.1C 1.5V CUT-OFF).

Manufacture of lithium secondary battery

LiNi0.88Co0.1Mn0.02O2 as a cathode active material, carbon black as a conductive material, and polyvinylidene fluoride (PVdF) as a binder were mixed in a weight ratio of 96.5:2:1.5 to prepare a cathode slurry.

The cathode slurry was uniformly applied to an aluminum current collector (thickness: 12 $\mu$m), then vacuum dried and roll-pressed to prepare a cathode.

The cathode and the anode were respectively notched into a predetermined size and stacked, then an electrode cell was fabricated by interposing a separation membrane (polyethylene, thickness 13 $\mu$m) between the cathode and the anode. Thereafter, tab parts of the cathode and the anode were welded, respectively. The assembly of the welded cathode/separation membrane/anode was placed into a pouch, and three sides of the pouch were sealed, leaving one side open for electrolyte injection ("electrolyte injection side"). At this time, a portion having the electrode tab was included in the sealing part. After injecting the electrolyte through the electrolyte injection side, the remaining electrolyte injection side was also sealed, and then impregnated for 12 hours or more to manufacture a lithium secondary battery.

A solution, prepared by dissolving a 1 M LiPF6 solution in a mixed solvent of EC/EMC/DEC (25/45/30; volume ratio), and further adding 1 wt% of vinylene carbonate (VC), 0.5 wt% of 1,3-propene sultone (PRS), and 0.5 wt% of lithium bis(oxalato)borate (LiBOB) based on the total weight of the solution, was used as the electrolyte.

Then, pre-charging was performed on the lithium secondary battery for 36 minutes at a current corresponding to 0.25C. After 1 hour, degassing was performed, followed by aging for 24 hours or more. Thereafter, formation charging and discharging was performed (charging conditions: CC/CV 0.2C 4.2V 0.05C CUT-OFF; discharging conditions: CC 0.2C 2.5V CUTOFF).

Subsequently, standard charging and discharging was performed (charging conditions: CC/CV 0.5C 4.2V 0.05C CUT-OFF; discharging conditions: CC 0.5C 2.5V CUT-OFF).

Example 2

Composite particles, an anode and a lithium half-cell were manufactured in the same manner as in Example 1, except that carbon-based particles were prepared according to the following method.

A mixture of petroleum coke powder and a KOH aqueous solution was heated to a temperature of 600 °C to 850 °C at a rate of 10 °C/min in an argon gas atmosphere, and heat-treated at 600 °C to 850 °C for 1 hour to activate the petroleum coke powder.

A mixture of a 1 M hydrochloric acid solution and the petroleum coke powder was stirred at 70 °C for 12 hours, and repeatedly washed with distilled water until the pH reached 7.

The petroleum coke powder was dried after washing and heat-treated at 750 °C for 1 hour while injecting the hydrogen-containing gas to prepare carbon-based particles.

Example 3

Composite particles, an anode and a lithium half-cell were manufactured in the same manner as in Example 1, except that the coconut shell charcoal powder was dried after washing and heat-treated at 900 °C for 1 hour while injecting the hydrogen-containing gas to prepare carbon-based particles.

Example 4

Composite particles, an anode and a lithium half-cell were manufactured in the same manner as in Example 1, except that the coconut shell charcoal powder was activated according to the following method.

CO2 gas was injected into the coconut shell charcoal powder at a flow rate of 600 mL/min at 900 °C for 5 hours to activate the coconut shell charcoal powder.

Example 5

Composite particles, an anode and a lithium half-cell were manufactured in the same manner as in Example 1, except that the carbon-based particles were prepared according to the following method.

Resol phenol formaldehyde resin was heated to 900 °C at a rate of 10 °C/min while injecting a nitrogen gas into a resol phenol formaldehyde resin. The resin was then carbonized at 900 °C for 1 hour, and cooled naturally to room temperature (25 °C) to prepare resin-based charcoal powder.

A mixture of the resin-based charcoal powder and a KOH aqueous solution was heated to a temperature of 600 °C to 850 °C at a rate of 10 °C/min in an argon gas atmosphere, and heat-treated at 600 °C to 850 °C for 1 hour to activate the resin-based charcoal powder.

A mixture of a 1 M hydrochloric acid solution and the resin-based charcoal powder was stirred at 70 °C for 12 hours, and repeatedly washed with distilled water until the pH reached 7.

The resin-based charcoal powder was dried after washing and heat-treated at 750 °C for 1 hour while injecting the hydrogen-containing gas to prepare carbon-based particles.

Example 6

Composite particles, an anode and a lithium half-cell were manufactured in the same manner as in Example 2, except that the petroleum coke powder was dried after washing and heat -treated at 900 °C for 1 hour while injecting the hydrogen-containing gas to prepare carbon-based particles.

Example 7

Composite particles, an anode and a lithium half-cell were manufactured in the same manner as in Example 2, except that the petroleum coke powder was dried after washing and heat-treated at 950 °C for 1 hour while injecting the hydrogen-containing gas to prepare carbon-based particles.

Example 8

Composite particles, an anode and a lithium half-cell were manufactured in the same manner as in Example 2, except that the petroleum coke powder was dried after washing and heat-treated at 650 °C for 1 hour while injecting the hydrogen-containing gas to prepare carbon-based particles.

Example 9

Composite particles, an anode and a lithium half-cell were manufactured in the same manner as in Example 1, except that the coconut shell charcoal powder was activated according to the following method.

CO2 gas was injected into the coconut shell charcoal powder at a flow rate of 600 mL/min at 750 °C for 3 hours to activate the coconut shell charcoal powder.

Example 10

Composite particles, an anode and a lithium half-cell were manufactured in the same manner as in Example 1, except that the coconut shell charcoal powder was dried after washing and heat-treated at 950 °C for 3 hours while injecting the hydrogen-containing gas to prepare carbon-based particles.

Example 11

Composite particles, an anode and a lithium half-cell were manufactured in the same manner as in Example 1, except that, when forming the silicon-containing coating, the temperature was increased to 350 °C at a rate of 5 °C/min to 20 °C/min, and then held at 350 °C for about 90 minutes to calcine.

Example 12

Composite particles, an anode and a lithium half-cell were manufactured in the same manner as in Example 1, except that, when forming the silicon-containing coating, the temperature was increased to 450 °C at a rate of 5 °C/min to 20 °C/min, and then held at 450 °C for about 150 minutes to calcine.

Comparative Example 1

Composite particles, an anode and a lithium half-cell were manufactured in the same manner as in Example 1, except that the coconut shell charcoal powder was dried after washing and heat-treated at 600 °C for 1 hour while injecting the hydrogen-containing gas to prepare carbon-based particles.

Comparative Example 2

Composite particles, an anode and a lithium half-cell were manufactured in the same manner as in Example 5, except that the resin-based charcoal powder was dried after washing and heat-treated at 600 °C for 1 hour while injecting the hydrogen-containing gas to prepare carbon-based particles.

Comparative Example 3

Composite particles, an anode and a lithium half-cell were manufactured in the same manner as in Example 2, except that the stirring and washing were not performed, and the petroleum coke powder was heat-treated at 750 °C for 1 hour while injecting the hydrogen-containing gas to prepare carbon-based particles.

Comparative Example 4

Composite particles, an anode and a lithium half-cell were manufactured in the same manner as in Example 2, except that the petroleum coke powder was dried after washing and heat -treated at 600 °C for 1 hour while injecting the hydrogen-containing gas to prepare carbon-based particles.

Comparative Example 5

Composite particles, an anode and a lithium half-cell were manufactured in the same manner as in Example 2, except that the petroleum coke powder was dried after washing and heat-treated at 1000 °C for 1 hour while injecting the hydrogen-containing gas to prepare carbon-based particles.

Comparative Example 6

Composite particles, an anode and a lithium half-cell were manufactured in the same manner as in Example 1, except that the coconut shell charcoal powder was activated according to the following method.
$CO_2$ gas was injected into the coconut shell charcoal powder at a flow rate of 500 mL/min at 600 °C for 1 hour to activate the coconut shell charcoal powder.

Experimental Example

(1) Measurement of the first Raman peak intensity ratio (ID/IG) and the second Raman peak intensity ratio (ID*/IG)

For the composite particles of the above-described examples and comparative examples, a Raman spectroscopy graph showing the change in peak intensity with respect to wavenumber (Raman shift, cm$^{-1}$) was obtained using a 532 nm laser Raman analyzer (Laser Raman Spectroscopy) (Model name: Invia, Manufacturer: RENISHAW).
The specific measurement method of the Raman analyzer was as follows.

  i) The power of the Raman analyzer was turned on.
  ii) A spectral acquisition setup window was opened.
  iii) 'Static' was selected as the Grating Scan Type, and 1000 (Raman Shift (cm$^{-1}$)) was entered as the Center value.
  iv) In Configuration, a 532 nm edge filter was selected as the laser filter element, 1800/mm (vis) as the grating, and Renishaw 1024 StreamLine CCD as the detector.
  v) In the acquisition condition setting, the exposure time (s) was set to 20, the objective to 50, the accumulation to 10, the laser power (%) to 1 (<0.5mW), and the laser focus level (%) to 0 (beam size: 1 $\mu$m to 2 $\mu$m).
  vi) After placing the composite particles on the sample stage and checking the measurement area, the Raman spectroscopy graph of the composite particles was acquired.

The Raman spectroscopy graph was subjected to baseline correction (1000 cm$^{-1}$ to 1800 cm$^{-1}$) using the WiRE™ software, and was deconvoluted into five curves using the Lorentzian curve measured by the curve fit function: a D* band with the maximum peak intensity in the wavenumber range of 1100 cm$^{-1}$ to 1250 cm$^{-1}$, a D band with the maximum peak intensity in the range of 1330 cm$^{-1}$ to 1380 cm$^{-1}$, a D" band with the maximum peak intensity in the range of 1500 cm$^{-1}$ to 1550 cm$^{-1}$, a G band with the maximum peak intensity in the range of 1560 cm$^{-1}$ to 1585 cm$^{-1}$, and a D' band with the maximum peak intensity in the range of 1590 cm$^{-1}$ to 1620 cm$^{-1}$.
The maximum peak intensity (ID) of the D band, the maximum peak intensity (IG) of the G band, and the maximum peak intensity (ID*) of the D* band were substituted into Equation 1 and Equation 2 to calculate the first Raman peak intensity ratio (ID/IG) and the second Raman peak intensity ratio (ID*/IG).

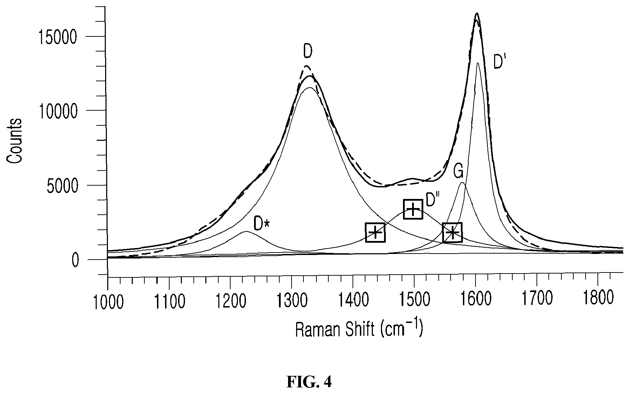

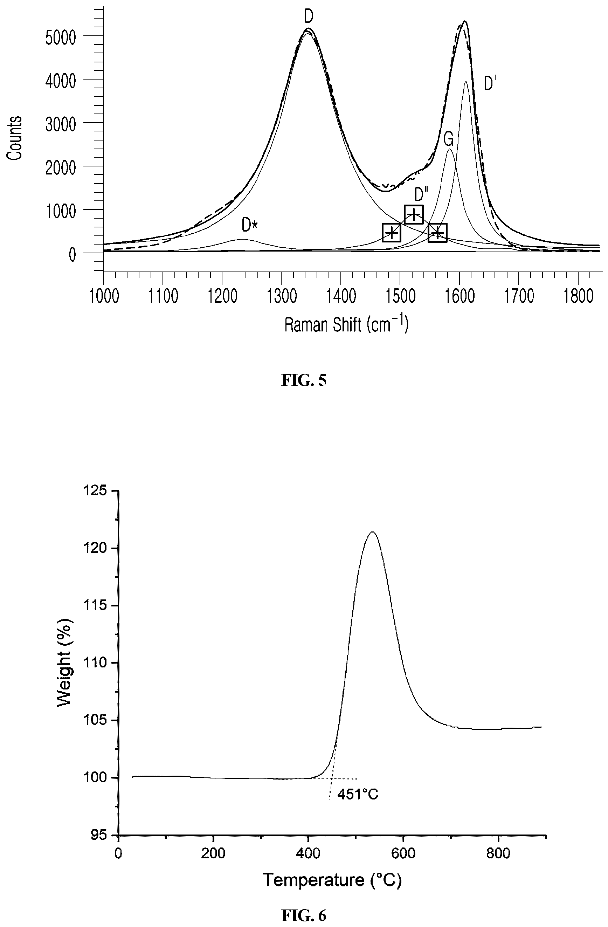

FIGS. 4 and 5 are Raman spectra of the composite particles of Example 6 and Comparative Example 2, respectively.
Referring to FIGS. 4 and 5, the Raman spectroscopy graph was deconvoluted into five curves corresponding to the above-described bands.

(2) Thermogravimetric analysis (TGA)

Each of the composite particles of the above-described examples and comparative examples was separated into 10 mg samples.

The sample was placed in a thermogravimetric analyzer (model name: Discovery TGA550, manufacturer: TA Instruments). The temperature was increased from room temperature (25 °C) to 900 °C at a heating rate of 10 °C/min, and the mass change of the sample was measured. The weight change of the sample with respect to the heating temperature was represented by a TGA graph.

In the TGA graph, the temperature at the intersection of the tangent at the average weight point between the maximum weight and the minimum weight, and the tangent at the minimum weight point, was evaluated as the weight increase start temperature.

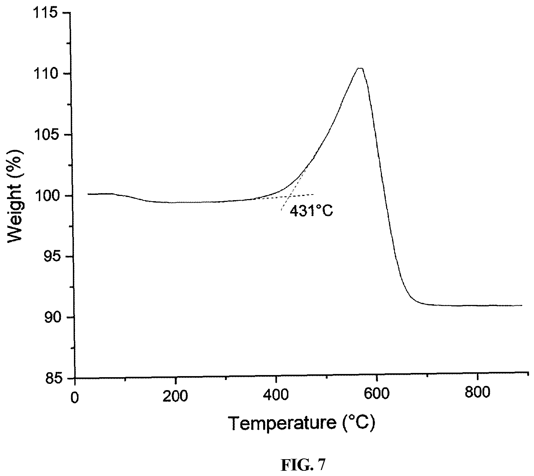

FIGS. 6 and 7 are thermogravimetric analysis (TGA) graphs showing the change in weight of the composite particles of the example 6 and comparative example 2, respectively, with respect to the temperature.

(3) Measurement of silicon (Si) content of composite particles

Samples of composite particles prepared according to the above-described examples and comparative examples were placed in a polypropylene (PP) tube. Nitric acid and a small amount of hydrofluoric acid were added to the polypropylene tube and left overnight at room temperature to dissolve the sample. After the sample was dissolved, the polypropylene tube was cooled, and saturated boric acid water was added to neutralize the hydrofluoric acid, followed by dilution with ultrapure water. The carbon component was removed using a 0.45 $\mu$m syringe filter.

The sample was then placed in an inductively coupled plasma spectrometer (model: ICP-OES Optima 8300, manufacturer: Perkin Elmer) and analyzed to measure the silicon content based on the total weight of the composite particles.

(4) Measurement of internal resistance

Charging (CC/CV 0.3C 4.2V 0.05C CUT-OFF) and discharging (CC 0.3C 2.5V CUT OFF) were performed twice on the lithium batteries manufactured according to the above-described examples and comparative examples at room temperature (25 °C). Thereafter, the batteries were discharged (CC 0.3C) from the charging (CC/CV 0.3C 4.2V 0.05C CUT-OFF) state to a 50% state-of-charge (SOC) point, and the 10-second DCIR (m$\Omega$) at the 50% SOC point was measured.

(5) Evaluation of high-temperature capacity retention rate (at 45 °C)

Charging (CC/CV 0.1C 0.01V 0.01C CUT-OFF) and discharging (CC 0.1C 1.5V CUT-OFF) were performed 100 times on the lithium half-cells of the above-described examples and comparative examples in a chamber maintained at 45 °C. The discharge capacity at the 100th cycle was divided by the discharge capacity at the 1st cycle and then multiplied by 100 to evaluate the high-temperature capacity retention rate.

The first Raman peak intensity ratio (ID/IG), the second Raman peak intensity ratio (ID*/IG), the TGA weight increase start temperature, and the silicon (Si) content based on the total weight of the composite particles of the examples and comparative examples are shown in Table 1.

The internal resistance and the high-temperature capacity retention rate of the examples and comparative examples are shown in Table 2.

[TABLE 1]

| | Raman spectroscopy | | TGA weight increase start -temperature (°C) | Si content (wt%) |
|---|---|---|---|---|
| | ID/IG | ID*/IG | | |
| Example 1 | 2.27 | 0.09 | 557 | 40 |
| Example 2 | 2.63 | 0.32 | 550 | 43 |
| Example 3 | 2.55 | 0.27 | 540 | 48 |
| Example 4 | 2.55 | 0.23 | 537 | 50 |
| Example 5 | 2.63 | 0.36 | 515 | 45 |

(continued)

|  | Raman spectroscopy | | TGA weight increase start -temperature (°C) | Si content (wt%) |
|---|---|---|---|---|
|  | ID/IG | ID*/IG | | |
| Example 6 | 2.37 | 0.33 | 451 | 43 |
| Example 7 | 2.38 | 0.34 | 443 | 45 |
| Example 8 | 2.34 | 0.30 | 575 | 44 |
| Example 9 | 2.20 | 0.30 | 548 | 43 |
| Example 10 | 1.91 | 0.32 | 483 | 43 |
| Example 11 | 2.36 | 0.32 | 550 | 38 |
| Example 12 | 2.34 | 0.33 | 534 | 52 |
| Comparative Example 1 | 2.18 | 0.12 | 397 | 43 |
| Comparative Example 2 | 2.11 | 0.13 | 431 | 43 |
| Comparative Example 3 | 2.22 | 0.13 | 600 | 43 |
| Comparative Example 4 | 2.10 | 0.20 | 593 | 43 |
| Comparative Example 5 | 2.25 | 0.32 | 420 | 43 |
| Comparative Example 6 | 2.37 | 0.31 | 583 | 43 |

[TABLE 2]

|  | Internal resistance (mΩ) | Capacity retention rate (%) (100 cycles at 45 °C) |
|---|---|---|
| Example 1 | 4.01 | 82.5 |
| Example 2 | 3.77 | 91.2 |
| Example 3 | 3.91 | 85.4 |
| Example 4 | 3.98 | 81.6 |
| Example 5 | 3.88 | 88.4 |
| Example 6 | 3.61 | 87.6 |
| Example 7 | 4.11 | 84.1 |
| Example 8 | 4.09 | 83.6 |
| Example 9 | 4.02 | 79.8 |
| Example 10 | 3.83 | 79.3 |
| Example 11 | 4.10 | 84.0 |
| Example 12 | 4.01 | 83.2 |
| Comparative Example 1 | 4.24 | 74.5 |
| Comparative Example 2 | 4.38 | 72.8 |
| Comparative Example 3 | 4.20 | 69.3 |
| Comparative Example 4 | 3.99 | 66.4 |
| Comparative Example 5 | 4.11 | 78.3 |
| Comparative Example 6 | 3.85 | 77.8 |

Referring to Tables 1 and 2, in the examples in which the weight increase start temperature in the TGA analysis was 440 °C to 580 °C, the internal resistance was generally reduced and the high-temperature capacity retention rate was improved compared to the comparative examples.

In Examples 1, 3 and 4, in which the second Raman peak intensity ratio was less than 0.30, the internal resistance was relatively increased and the high-temperature capacity retention rate was relatively decreased compared to the other examples.

In examples 9 and 10 in which the first Raman peak intensity ratio was less than 2.25, the internal resistance was relatively increased and the high-temperature capacity retention rate was decreased compared to the other examples.

In Example 11, in which the silicon content based on the total weight of the composite particles was less than 40 wt%, the internal resistance was relatively increased compared to the other examples.

In Example 12, in which the silicon content based on the total weight of the composite particles was greater than 50 wt%, the high-temperature capacity retention rate was relatively decreased compared to the other examples.

The invention is also defined by the following aspects:

Aspect 1. An anode active material for a secondary battery, comprising composite particles that include:

carbon-based particles including pores; and
a silicon-containing coating formed on a surface of the carbon-based particles,
wherein a weight increase start temperature of the composite particle measured by thermogravimetric analysis (TGA) at a heating rate of 10 °C/min, is from 440 °C to 580 °C.

Aspect 2. The anode active material for a secondary battery according to aspect 1, wherein the weight increase start temperature is a temperature at an intersection of: a tangent at an average weight point between a maximum weight and a minimum weight; and a tangent at a minimum weight point in a graph of measurements by thermogravimetric analysis (TGA).

Aspect 3. The anode active material for a secondary battery according to aspect 1 or aspect 2, wherein the weight increase start temperature is from 451 °C to 550 °C.

Aspect 4. The anode active material for a secondary battery according to any one of aspects 1 to 3, wherein a first Raman peak intensity ratio of the composite particle, defined by Equation 1 below, is 2.25 or more:

[Equation 1]

$$\text{First Raman peak intensity ratio} = \text{ID/IG},$$

wherein ID is a maximum peak intensity in a wavenumber range of 1330 cm$^{-1}$ to 1380 cm$^{-1}$ in the Raman spectrum of the composite particle, and IG is a maximum peak intensity in a wavenumber range of 1560 cm$^{-1}$ to 1585 cm$^{-1}$ in the Raman spectrum of the composite particle.

Aspect 5. The anode active material for a secondary battery according to aspect 4, wherein the first Raman peak intensity ratio is from 2.37 to 2.63.

Aspect 6. The anode active material for a secondary battery according to aspect 4 or aspect 5, wherein the Raman spectrum is obtained by deconvoluting a Raman spectroscopy graph of the composite particle into five curves, including a D* band with a maximum peak intensity in a wavenumber range of 1100 cm$^{-1}$ to 1250 cm$^{-1}$, a D band with a maximum peak intensity in a wavenumber range of 1330 cm$^{-1}$ to 1380 cm$^{-1}$, a D" band with a maximum peak intensity in a wavenumber range of 1500 cm$^{-1}$ to 1550 cm$^{-1}$, a G band with a maximum peak intensity in a wavenumber range of 1560 cm$^{-1}$ to 1585 cm$^{-1}$, and a D' band with a maximum peak intensity in a wavenumber range of 1590 cm$^{-1}$ to 1620 cm$^{-1}$.

Aspect 7. The anode active material for a secondary battery according to any one of aspects 1 to 6, wherein a second Raman peak intensity ratio of the composite particle, defined by Equation 2 below, is 0.30 or more:

[Equation 2]

$$\text{Second Raman peak intensity ratio} = \text{ID*/IG},$$

wherein ID* is a maximum peak intensity in a wavenumber range of 1100 cm$^{-1}$ to 1250 cm$^{-1}$ in a Raman spectrum of the composite particle, and IG is a maximum peak intensity in a wavenumber range of 1560 cm$^{-1}$ to 1585 cm$^{-1}$ in the Raman spectrum of the composite particle.

Aspect 8. The anode active material for a secondary battery according to aspect 7, wherein the second Raman peak intensity ratio is 0.32 to 0.36.

Aspect 9. The anode active material for a secondary battery according to any one of aspects 1 to 8, wherein the carbon-based particles comprise at least one of activated carbon, carbon nanotubes, carbon nanowires, graphene, carbon fibers, carbon black, graphite, porous carbon, pyrolyzed cryogel, pyrolyzed xerogel, or pyrolyzed aerogel.

Aspect 10. The anode active material for a secondary battery according to any one of aspects 1 to 9, wherein the silicon-containing coating comprises silicon in an amorphous structure.

Aspect 11. The anode active material for a secondary battery according to any one of aspects 1 to 10, wherein a silicon content based on a total weight of the composite particles is 40% by weight to 50% by weight.

Aspect 12. The anode active material for a secondary battery according to any one of aspects 1 to 11, wherein the composite particle further comprises a carbon coating formed on the silicon-containing coating.

Aspect 13. The anode active material for a secondary battery according to any one of aspects 1 to 12, wherein the pores of the carbon-based particles have a shape that is recessed from an outermost portion of the carbon-based particles into an interior of the carbon-based particles.

Aspect 14. The anode active material for a secondary battery according to any one of aspects 1 to 13, wherein the carbon-based particles comprise an amorphous structure.

Aspect 15. A secondary battery comprising:

   an anode comprising an anode active material for a secondary battery according to any one of aspects 1 to 14; and
   a cathode disposed opposite the anode.

**Claims**

1. An anode active material for a secondary battery, comprising composite particles that include:

   carbon-based particles including pores; and
   a silicon-containing coating formed on a surface of the carbon-based particles,
   wherein a weight increase start temperature of the composite particle measured by thermogravimetric analysis (TGA) at a heating rate of 10 °C/min, is from 440 °C to 580 °C.

2. The anode active material for a secondary battery according to claim 1, wherein the weight increase start temperature is a temperature at an intersection of: a tangent at an average weight point between a maximum weight and a minimum weight; and a tangent at a minimum weight point in agraph of measurements by thermogravimetric analysis (TGA).

3. The anode active material for a secondary battery according to claim 1 or claim 2, wherein the weight increase start temperature is from 451 °C to 550 °C.

4. The anode active material for a secondary battery according to any one of claims 1 to 3, wherein a first Raman peak intensity ratio of the composite particle, defined by Equation 1 below, is 2.25 or more:

[Equation 1]

$$\text{First Raman peak intensity ratio} = ID/IG,$$

wherein ID is a maximum peak intensity in a wavenumber range of 1330 cm$^{-1}$ to 1380 cm$^{-1}$ in the Raman spectrum of the composite particle, and IG is a maximum peak intensity in a wavenumber range of 1560 cm$^{-1}$ to 1585 cm$^{-1}$ in the Raman spectrum of the composite particle.

5. The anode active material for a secondary battery according to claim 4, wherein the first Raman peak intensity ratio is from 2.37 to 2.63.

6. The anode active material for a secondary battery according to claim 4 or claim 5, wherein the Raman spectrum is obtained by deconvoluting a Raman spectroscopy graph of the composite particle into five curves, including a D* band with a maximum peak intensity in a wavenumber range of 1100 cm$^{-1}$ to 1250 cm$^{-1}$, a D band with a maximum peak intensity in a wavenumber range of 1330 cm$^{-1}$ to 1380 cm$^{-1}$, a D" band with a maximum peak intensity in a wavenumber range of 1500 cm$^{-1}$ to 1550 cm$^{-1}$, a G band with a maximum peak intensity in a wavenumber range of 1560 cm$^{-1}$ to 1585 cm$^{-1}$, and a D' band with a maximum peak intensity in a wavenumber range of 1590 cm$^{-1}$ to 1620 cm$^{-1}$.

7. The anode active material for a secondary battery according to any one of claims 1 to 6, wherein a second Raman peak intensity ratio of the composite particle, defined by Equation 2 below, is 0.30 or more:

[Equation 2]

Second Raman peak intensity ratio = ID*/IG,

wherein ID* is a maximum peak intensity in a wavenumber range of 1100 cm$^{-1}$ to 1250 cm$^{-1}$ in a Raman spectrum of the composite particle, and IG is a maximum peak intensity in a wavenumber range of 1560 cm$^{-1}$ to 1585 cm$^{-1}$ in the Raman spectrum of the composite particle.

8. The anode active material for a secondary battery according to claim 7, wherein the second Raman peak intensity ratio is 0.32 to 0.36.

9. The anode active material for a secondary battery according to any one of claims 1 to 8, wherein the carbon-based particles comprise at least one of activated carbon, carbon nanotubes, carbon nanowires, graphene, carbon fibers, carbon black, graphite, porous carbon, pyrolyzed cryogel, pyrolyzed xerogel, or pyrolyzed aerogel.

10. The anode active material for a secondary battery according to any one of claims 1 to 9, wherein the silicon-containing coating comprises silicon in an amorphous structure.

11. The anode active material for a secondary battery according to any one of claims 1 to 10, wherein a silicon content based on a total weight of the composite particles is 40% by weight to 50% by weight.

12. The anode active material for a secondary battery according to any one of claims 1 to 11, wherein the composite particle further comprises a carbon coating formed on the silicon-containing coating.

13. The anode active material for a secondary battery according to any one of claims 1 to 12, wherein the pores of the carbon-based particles have a shape that is recessed from an outermost portion of the carbon-based particles into an interior of the carbon-based particles.

14. The anode active material for a secondary battery according to any one of claims 1 to 13, wherein the carbon-based particles comprise an amorphous structure.

15. A secondary battery comprising:

an anode comprising an anode active material for a secondary battery according to any one of claims 1 to 14; and a cathode disposed opposite the anode.

**FIG. 1**

107   127

150

160

**FIG. 2**

140

110
105 } 100
110

120
125 } 130
120

160

**FIG. 3**

**FIG. 4**

**FIG. 5**

**FIG. 6**

**FIG. 7**

Europäisches
Patentamt

European
Patent Office

Office européen
des brevets

## EUROPEAN SEARCH REPORT

**Application Number**

EP 25 19 3134

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/085356 A9 (ENEVATE CORP [US]) 17 March 2022 (2022-03-17)<br>* abstract *<br>* paragraphs [0004] - [0012] *<br>* paragraph [0090]; figures 15A-15H *<br>* paragraph [0072] *<br>* paragraph [0084]; figure 12 *<br>* claims 1-16 *<br>----- | 1-15 | INV.<br>H01M4/36<br>H01M4/38 |
| X | US 2023/411606 A1 (MOON JOON HYUNG [KR] ET AL) 21 December 2023 (2023-12-21)<br>* abstract *<br>* paragraphs [0031] - [0061] *<br>* claims 1-15 *<br>----- | 1-15 | |
| A | CN 113 169 308 A (NEXEON LTD) 23 July 2021 (2021-07-23)<br>* the whole document *<br>----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 23 January 2026 | Stachowiak, Olaf |

## ANNEX TO THE EUROPEAN SEARCH REPORT
## ON EUROPEAN PATENT APPLICATION NO.

EP 25 19 3134

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | | | Publication date | Patent family member(s) | | Publication date |
|---|---|---|---|---|---|---|
| US 2022085356 | A9 | | 17-03-2022 | US | 2020227738 A1 | 16-07-2020 |
| | | | | US | 2022352506 A1 | 03-11-2022 |
| US 2023411606 | A1 | | 21-12-2023 | CN | 117254023 A | 19-12-2023 |
| | | | | EP | 4293740 A1 | 20-12-2023 |
| | | | | KR | 20230172978 A | 26-12-2023 |
| | | | | US | 2023411606 A1 | 21-12-2023 |
| CN 113169308 | A | | 23-07-2021 | CN | 113169308 A | 23-07-2021 |
| | | | | CN | 120164915 A | 17-06-2025 |
| | | | | CN | 120164916 A | 17-06-2025 |
| | | | | CN | 120164917 A | 17-06-2025 |
| | | | | CN | 120164918 A | 17-06-2025 |
| | | | | EP | 3878033 A1 | 15-09-2021 |
| | | | | EP | 4465371 A2 | 20-11-2024 |
| | | | | ES | 2986924 T3 | 13-11-2024 |
| | | | | GB | 2578796 A | 27-05-2020 |
| | | | | JP | 7600107 B2 | 16-12-2024 |
| | | | | JP | 2022506882 A | 17-01-2022 |
| | | | | JP | 2024147615 A | 16-10-2024 |
| | | | | KR | 20210089723 A | 16-07-2021 |
| | | | | KR | 20240129240 A | 27-08-2024 |
| | | | | US | 2020152973 A1 | 14-05-2020 |
| | | | | US | 2021376313 A1 | 02-12-2021 |
| | | | | US | 2024154098 A1 | 09-05-2024 |
| | | | | US | 20260011717 A1 | 08-01-2026 |
| | | | | WO | 2020095067 A1 | 14-05-2020 |